# EUROPEAN PATENT APPLICATION

(11) **EP 4 789 747 A1**
(43) Date of publication of application: **12.08.2026**
(21) Application number: 26157258.0
(22) Date of filing: 09.02.2026
(51) Int. Cl.: B01D 39/16

(54) **FILTER MEDIUM, METHOD OF PRODUCING, AND FILTER ELEMENT**

(30) Priority: 10.02.2025 DE 102025104682
(71) Applicant: MANN+HUMMEL GmbH, 71636 Ludwigsburg (DE)
(72) Inventor: STARZER, Matthias, 71636 Ludwigsburg (DE); SIEBENGARTNER, Roland, 71636 Ludwigsburg (DE); KRAUTNER, Christoph, 71636 Ludwigsburg (DE)
(74) Representative: Mann + Hummel Intellectual Property

(57) **Abstract**

A filter medium is provided, comprising a pre-filter layer made of staple fibers and a microfiber layer adhered to the pre-filter layer. The thickness of an adhesion interface is limited to a maximum of 30% of the total thickness of the pre-filter layer and the microfiber layer. Additionally, a method of producing the filter medium and a filter element designed for the filtration of cabin air, which filter element incorporates the filter medium, are described.

## Description

### Technical Field

The invention relates to a filter medium, a method of producing the filter medium, and a filter element including the filter medium.

### Background Art

The quality of air within enclosed spaces, such as vehicle cabins, has become an increasingly important health and comfort concern. The filtration of air in enclosed spaces has been aimed at removing dust, pollen, and other particulate matter to ensure a clean and safe breathing environment for occupants. The motivation for enhancing air quality stems from the desire to improve occupant health, comfort, and well-being by providing cleaner air, free from a wide range of contaminants.

Thus, separation capacity, such as the dust holding capacity, is an important parameter to measure the performance of air filters. However, high separation capacities are typically associated with a high pressure drop across the filter, leading to a high energy requirement to pull air across the filter.

There is therefore a need to provide a filter media that overcomes, or at least ameliorates, the problems described above and other disadvantages.

### Summary

In an aspect, there is provided a filter medium comprising a pre-filter layer and a microfiber layer adhered to the pre-filter layer. The pre-filter layer comprises staple fibers. The thickness of an adhesion interface is at most 30% of the thickness of the pre-filter layer and the microfiber layer.

Bonding of adjacent layers of a multilayer filter medium may cause a loss of surface area that is useful for filtration. Bonding is typically accomplished through the following technologies: thermal bonding, chemical bonding, and/or mechanical bonding. However, mechanical bonding and thermal bonding, such as calendaring and ultrasonic welding, may destroy the local structure of the layers. Furthermore, thermal bonding damages the fibers, which results in a decrease of filtration surface area. Hence, the disclosed pre-filter layer and microfiber layer are advantageously bonded by chemical bonding or adhesion. Chemical bonding refers to the application of a binding agent, which is also termed as a bonding agent or binder, for adhesion. While heat may be required, e.g., to melt or activate the binding agent, the heat applied may not be as aggressive or high as that required in thermal bonding. Where chemical bonding with a binding agent is used, there are typical problems faced during bonding of a staple fiber layer to another layer. Staple fiber layers are relatively thick due to air spaces within its thickness. Binding agents may disadvantageously penetrate through the air spaces or pores of the staple fiber layer and may therefore not be available to bond or adhere with the other layer. Furthermore, penetration of the binding agent deeper into the staple fiber layer means that a larger surface area is covered by the binding agent, resulting in blockage of useful filtration surface area. Hardened binding agent, i.e. binding agent in its final form, does not measurably contribute to filtration efficiency.

It was discovered that filtration efficiency is improved when the area of adhesion between adjacent filter layers, termed herein as the "adhesion interface", is kept to the areas proximal to both layers. The adhesion interface may span both of the adjacent layers. The adhesion interface may include the boundary surfaces of the adjacent filter layers proximate or facing each other. In embodiments, the adhesion interface is at most 30% or at most 25% or at most 20% of the thickness of the pre-filter layer and the microfiber layer. The thickness of the adhesion interface may be measured from the deepest depth that a fiber in the pre-filter layer is bonded to the deepest depth that a fiber in the microfiber layer is bonded. When the adhesion interface is above 30% thickness, there will be too much useful filtration surface area being blocked.

Where the adjacent layers have an adhesion interface of at most 30% thickness, the adjacent layers may have an openness of at least 70%.

Openness is defined as the volume of media that is not blocked or has useful filtration surface. Openness can be measured by the permeability of the flow of fluid through the media, which is the adjacent layers of the pre-filter layer and the microfiber layer here, e.g. air permeability or dust holding capacity. Openness can be measured by the pore size distribution or surface area, such as BET surface area per gram of the adjacent layers.

Openness can also be roughly seen as the inverse of the area blocked by bonding. With respect to chemically bonded layers such as the disclosed filter medium, the openness of the composite of the pre-filter layer and microfiber layer may be at least 70%. The openness may be 70% in the event that the binding agent, e.g. the adhesive, in the adhesion interface is evenly provided at 30% thickness across the entire face of the composite. However, in most embodiments, there may be some areas of the adhesion interface that may have lesser adhesive and thus a thinner adhesion interface, or even no adhesive and thus no adhesion interface or a 100% openness. Thus, the openness of the disclosed composite may be at least 70% or at least 75% or at least 80% or higher. With respect to thermally bonded layers, the areas that are thermally bonded are damaged, thus those local areas may have a 0% openness.

In embodiments, an adhesive is used as the binding agent. The thickness of the adhesive in the adhesion interface may be at most 30% or at most 25% or at most 20% of the thickness of the pre-filter layer and the microfiber layer. In some embodiments, the adhesive in the adhesion interface may penetrate the pre-filter layer to at most 30% or at most 28% or at most 26% or at most 25% of the thickness of the pre-filter layer. The thickness of the adhesive in the pre-filter layer may be at most 30% or at most 28% or at most 26% or at most 25% of the thickness of the pre-filter layer. The thickness of the adhesive may be measured from the boundary of the pre-filter layer proximate the microfiber layer to the deepest depth that the adhesive adheres to a fiber in the pre-filter layer.

The adhesive may be a hot-melt adhesive. The adhesive may be a thermoplastic polymer. The thermoplastic polymer may be selected from one or more compounds of the following groups: polyolefin, polyester, polyurethane and/or polyamide. In embodiments, suitable base polymers for the adhesives include polyamides, polyethylene, amorphous polyalphaolefins, ethylene vinyl acetate (co)polymers, polyester elastomers, polyurethane elastomers, copolyamide elastomers, and vinylpyrrolidone/vinyl acetate copolymers. In an embodiment, the adhesive may comprise polyurethane.

The adhesive may have a basis weight in the range of 1 g/m² to 10 g/m², or in the range of 3 g/m² to 7 g/m². When the adhesive is provided above 10 g/m², the adhesive may decrease the openness of the composite and/or block too much useful filtration surface area. Furthermore, when the adhesive is provided below 1 g/m², the adhesion strength may not be sufficient. The adhesive may be sprayed onto the pre-filter layer and/or the microfiber layer. The adhesive may be provided or deposited or otherwise applied onto the pre-filter layer and/or the microfiber layer to result in homogeneously distributed adhesive fibers. The adhesive may be liquid when applied onto the pre-filter layer and/or the microfiber layer. The adhesive fibers may be relatively short fibers and/or droplets. The adhesive may comprise fibers with a fiber diameter in the range of 10 µm to 100 µm.

In embodiments, the adhesion interface may be substantially planar to the plane of the layers. The disclosed filter medium advantageously does not require mechanical compression of the layers at temperatures of at least the melting point of a material of a layer, as required with solid adhesives or embossed calendar rolls which causes local compression of the layers, resulting in reduction of filtration surface area at local spots. The pre-filter layer, microfiber layer and the binding agent, e.g. adhesive, may be mechanically compressed together at temperatures of at least the melting point of the binding agent. In such embodiment, the pre-filter layer, microfiber layer and binding agent may be laminated together. The temperature used during adhesive lamination may usually be lower than that used during calendaring. In such embodiment, the adhesive may advantageously have a basis weight of 3 g/m² to 7 g/m², or 3 g/m² to 5 g/m², or less than 5 g/m² or 3 g/m². The pre-filter layer may have a substantially homogeneous packing density distribution across the thickness of the pre-filter layer.

The disclosed filter medium may have a high filtration efficiency with high air permeability. The filter medium may have a filtration efficiency of 80% or higher, or 90% or higher, or 99% or higher, when measured according to DIN 71460-1 (issued April 2006) with 0.3 µm NaCl particles at a volume flow rate of 20 cm/s. The filter medium may have a dust holding capacity at 50 Pa of more than 11 g/m², or more than 15 g/m². The filter medium may have an air permeability of 450 l/m²s or higher, or 470 l/m²s or higher, 490 l/m²s or higher, or 1000 l/m²s or higher, when measured according to DIN EN ISO 9237 (issued December 1995) at 200 Pa.

The staple fibers of the pre-filter layer may be thermally bonded together, for example by the use of thermal air bonding. Thermal bonding of the staple fiber layer advantageously results in a more stable layer or a layer that is easier to process, as compared to a mechanically bonded staple fiber layer. The staple fibers of the pre-filter layer may comprise one, two or more components. The staple fibers of the pre-filter layer may comprise bicomponent fibers. The bicomponent or multicomponent staple fibers may have any suitable configuration, such as a core-sheath configuration or a segmented pie configuration. Advantageously, a component with the lower melting point can be melted and hardened to facilitate thermal bonding of the staple fibers together. Further advantageously, a bicomponent staple fiber layer may provide homogeneous bonded points throughout the layer. The staple fibers may comprise a polyethylene terephthalate (PET) component and a polyethylene terephthalate copolymer (coPET) component. The staple fibers may comprise a polypropylene (PP) component and a polypropylene copolymer (coPP) component. The staple fibers may alternatively be made of polymers of different compositions.

The pre-filter layer may have a basis weight in the range of 60 g/m² to 100 g/m², or in the range of 70 g/m² to 90 g/m², preferably 80 g/m². The staple fibers may have a fiber diameter in the range of 10 µm to 40 µm, or in the range of 15 µm to 30 µm, or in the range of 20 µm to 25 µm. The pre-filter layer may have a thickness of less than 1 mm, for example in the range of 0.5 mm to 0.9 mm.

The pre-filter layer may have a bending stiffness according to DIN 53 121 (issued August 2014) of at least 0.4 Nmm in machine direction and/or at least 0.2 Nmm in cross direction.

As the fibers in the disclosed microfiber layer are in the micron to sub-micron range, the microfiber layer can be flimsy and difficult to handle or process. The pre-filter layer may be included in the filter medium to provide support to a thin microfiber layer. The pre-filter layer may be termed a "carrier layer" or "support layer" or "substrate". The pre-filter layer may provide some filtration capabilities to the filter medium.

The microfiber layer may provide the disclosed filter medium with a filtration efficiency that reaches the efficiency disclosed above. The microfiber layer may have a basis weight in the range of 15 g/m² to 40 g/m². The microfiber layer may comprise fibers having a fiber diameter in the range of 0.8 µm to 5 µm. The microfiber layer may have a thickness of less than 0.5 mm. The microfiber layer may comprise meltblown fibers, spunbond fibers, or fibers produced by any other method, as long as the fiber diameter and/or basis weight are as disclosed.

The microfiber layer may be provided and adhered to the pre-filter layer. Alternatively, the microfibers of the microfiber layer may be laid onto the pre-filter layer or onto the adhesive during production. The fibers of the microfiber layer may comprise one, two or more components. The fibers of the microfiber layer may comprise polypropylene.

The pre-filter layer, by virtue of its name, may be provided on the upstream side of a filter element to filter fluids which may otherwise clog the microfiber layer. The pre-filter layer may alternatively be provided on the downstream side of a filter element, with the microfiber layer provided on the upstream side.

The disclosed filter medium may have a bending stiffness of at least 0.6 N/mm in machine direction and/or at least 0.3 N/mm in cross direction. The bending stiffness of the filter medium may be more than 0.6 N/mm, or more than 0.7 N/mm in machine direction. The disclosed microfiber layer and pre-filter layer may have a total basis weight in the range of 90 g/m² to 120 g/m². The disclosed microfiber layer and pre-filter layer may have a thickness in the range of 0.7 mm to 1.1 mm.

Advantageously, due to the stability of the two-layer filter medium, the disclosed filter medium may comprise further functional layers to extend its filtration abilities. The further layers may adjoin the pre-filter layer and/or the microfiber layer. For example, the filter medium may further comprise an activated carbon layer and/or an ion exchange layer.

In an aspect, there is provided a method of producing a filter medium, the method comprises: providing a pre-filter layer comprising staple fibers; and providing a microfiber layer adhered to the pre-filter layer, wherein the thickness of an adhesion interface is at most 30% of the thickness of the pre-filter layer and the microfiber layer.

The step of providing the pre-filter layer may include providing a pre-filter layer with characteristics as disclosed herein. Alternatively, the step of providing the pre-filter layer may include providing staple fibers and bonding them together. The staple fibers may be produced by a wetlaid or drylaid process. The staple fibers may be made of a material as disclosed herein. Resin granules of the desired material may be introduced into the wetlaid or drylaid process. The staple fibers may be bonded together by a suitable bonding method, such as by thermal bonding. The staple fiber layer may be produced to have characteristics as disclosed herein.

The method may further comprise providing a binding agent, such as an adhesive as disclosed herein, on the pre-filter layer. The step of providing the adhesive may include spraying the adhesive on the pre-filter layer. The adhesive may be provided by a spraying or hot-spraying process. Liquid adhesive may be provided on the pre-filter layer. The provided adhesive may have the characteristics as disclosed herein. The adhesive can advantageously be distributed over a surface of the pre-filter layer, yet provides an adhesion interface as disclosed herein. The adhesive can advantageously be provided homogeneously on the pre-filter layer. Compared with adhesives provided in solid form, such as in particulate or powder form, sprayed liquid adhesives may be less dense and therefore may not penetrate past 30% thickness of the pre-filter layer. An adhesive source may be heated to enable the adhesive to be provided in liquid form. The pre-filter layer on which the adhesive is applied may be provided at room temperature. The adhesive may be provided with a basis weight as disclosed herein, so that the adhesive is less likely to penetrate into the pre-filter layer.

Alternatively, the method may further comprise providing a binding agent, such as an adhesive as disclosed herein, on the microfiber layer.

The step of providing the microfiber layer adhered to the pre-filter layer may include adhering the microfiber layer to the pre-filter layer. The microfiber layer may be provided on the pre-filter layer having the binding agent provided thereon. Alternatively, the pre-filter layer may be provided on the microfiber layer having the binding agent provided thereon. Where the binding agent is provided on the pre-filter layer, the microfiber layer may be provided on the pre-filter layer by providing microfibers produced by a meltblown process or other suitable process. The microfibers produced may be laid onto a substrate, which could be the pre-filter layer. Where the binding agent is provided on the pre-filter layer as disclosed herein, the microfibers may adhere to the pre-filter layer after being deposited thereon. The binding agent and the microfibers may alternatively be contemporaneously deposited onto the pre-filter layer.

The method may further comprise laminating the microfiber layer adhered to the pre-filter layer. In embodiments, the microfiber layer adhered to the pre-filter layer may be laminated at a temperature of at least the melting point of the binding agent.

In another aspect, there is provided a filter element comprising the disclosed filter medium. The filter element may be suitable for filtering fluids. In embodiments, the filter element may be suitable for filtering air. The filter element may be suitable for the filtration of air in enclosed spaces, such as the air in a vehicle cabin.

In yet another aspect, there is provided a filter element for filtration of cabin air, the filter element comprising the disclosed filter medium.

### Brief Description of Drawings

The drawings show:
Fig. 1, which illustrates a schematic of an embodiment of the disclosed filter medium;
Fig. 2, which shows an electron micrograph of an embodiment of the disclosed filter medium; and
Fig. 3, which shows an electron micrograph of a comparative filter medium.

### Detailed Description

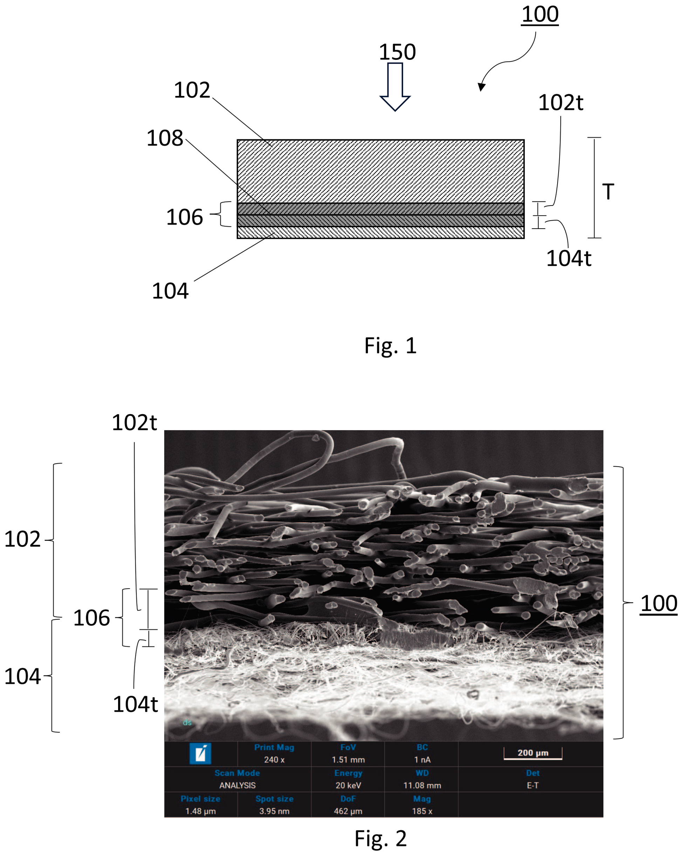

Fig. 1 shows a schematic of an embodiment of the disclosed filter medium 100. Filter medium 100 has a pre-filter layer 102 comprising staple fibers. Filter medium 100 also has a microfiber layer 104. Pre-filter layer 102 is adhered to microfiber layer 104. An adhesion interface 106 spans the areas proximal to pre-filter layer 102 and microfiber 104. The adhesion interface 106 includes the boundary surfaces 108 of layers 102, 104. The thickness of adhesion interface 106 is at most 30% of the thickness T of the layers 102, 104. The thickness of adhesion interface 106 is made of a thickness 104t within the microfiber layer 104 and a thickness 102t within the pre-filter layer 102. The thickness 102t may be similar or equal to the thickness 104t. In most cases, the thickness 102t is thicker than the thickness 104t, because the binding agent in adhesion interface 106 penetrates pre-filter layer 102 more. Furthermore, the binding agent may penetrate microfiber layer 104 less, thus will have thinner thickness 104t than thickness 102t, because microfiber layer 104 may have smaller pores than pre-filter layer 102, due to the thinner fiber diameters of the fibers in microfiber layer 104. When used in a filter element, air flowing into the filter element follows the direction of arrow 150. Thus, pre-filter layer 102 is on the upstream side and microfiber layer 104 is on the downstream side.

Fig. 2 shows a scanning electron micrograph, at 240x magnification, of an embodiment of the disclosed filter medium 100. Filter medium 100 has a pre-filter layer 102 comprising staple fibers, a microfiber layer 104, and an adhesion interface 106. Filter medium 100 was produced as follows. The staple fibers of the pre-filter layer 102 were made of bicomponent PET/coPET with a core-sheath configuration, a grammage of 80 g/m² and a median fiber diameter of about 23 µm. The staple fibers were thermally air bonded together to result in pre-filter layer 102. Hot-melt polyurethane glue was sprayed onto the pre-filter layer 102 with a basis weight ranging between 3 g/m² and 5 g/m². The pre-filter layer 102 with the wet glue was then provided as a substrate for PP meltblown fibers to be deposited thereon. The PP meltblown microfiber layer 104 and the pre-filter layer 102 were then hot-melt adhesive laminated to each other. Filter medium 100 (Example 1) was thereby produced. The fiber diameter of the PP meltblown fibers was observed by SEM images, using the Autofiber software, and the median fiber diameter was calculated. The PP meltblown fibers were deposited at a grammage measured using DIN EN 29073-1 (1989). The thickness of the PP meltblown microfiber layer 104 was measured using DIN EN ISO 9073-2 (1995). The adhesion interface 106 includes a thickness 104t within the microfiber layer 104 and a thickness 102t within the pre-filter layer 102. The thickness of 102t shown in Fig. 2 is about 20% of the thickness of pre-filter layer 102. Upon application, the binding agent, which is the hot-melt polyurethane glue, penetrated into the layers 102, 104 to bind the fibers of the layers 102, 104. The areas where the polyurethane glue was at blocks the filtration surface area. However, the adhesion interface 106 is advantageously at most 30% of the thickness of the pre-filter layer and the microfiber layer, and in the case of Fig. 2, less than about 25% of the thickness of layers 102, 104.

The characteristics of the microfiber layer 104 of Example 1 are listed in Table 1 below. A staple fiber layer having the same characteristics described in Example 1 was used in Examples 2 to 4. The characteristics of the microfiber layer of Examples 2 to 4 are also listed in Table 1 below.

**[Table 1]**

| | Example 1 | Example 2 | Example 3 | Example 4 |
|---|---|---|---|---|
| Average fiber diameter of meltblown microfibers (µm) | 1.3 | 1 | 3 | 4.4 |
| Grammage of meltblown fibers (g/m²) | 15 to 25 | 25 to 35 | 17 to 27 | 25 to 35 |
| Thickness of microfiber layer (mm) | 0.25 to 0.35 | 0.3 to 0.4 | 0.25 to 0.35 | 0.4 to 0.5 |

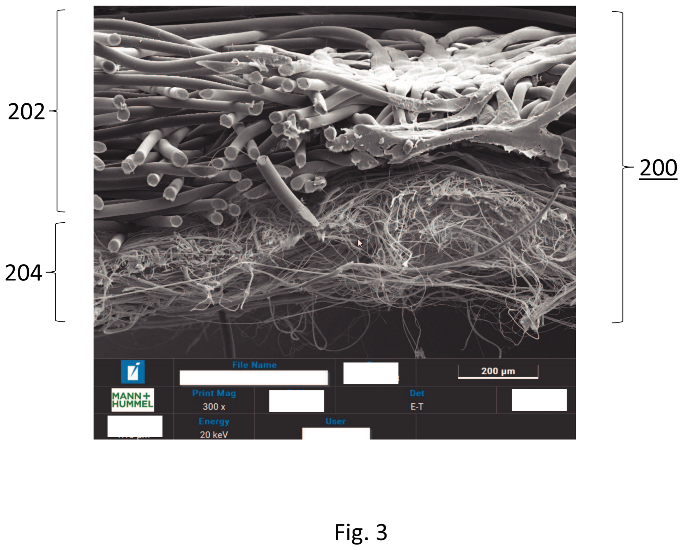

Fig. 3 shows a scanning electron micrograph, at 300x magnification, of a comparative filter medium 200. Filter medium 200 has a spunbond carrier layer 202 and a meltblown filtration layer 204. The meltblown filtration layer 204 has similar characteristics to Example 1 in Table 1 above. The spunbond carrier layer 202 has a grammage of 80 g/m². The layers 202, 204 are thermally bonded by embossed calendar rolls with point bonding. Thus, the points of the calendar rolls create a depression into the carrier layer 202. Fibers in the carrier layer 202 at the point of bonding can be seen in Fig. 3 to be compressed, resulting in a loss of filtration surface area. Fibers in the meltblown layer 204 proximate to the carrier layer 202 are also compressed and may result in a loss of filtration surface area. As the layers of filter medium 200 are thermally bonded together, no adhesion interface is present.

Table 2 below provides a comparison of the filter medium 100 of Fig. 2 (Example 1) and the filter medium 200 of Fig. 3 (Comparative Example 1).

**[Table 2]**

| | Example 1, Filter medium 100 of Fig. 2 | Comparative Example 1, Filter medium 200 of Fig. 3 |
|---|---|---|
| Meltblown average fiber diameter (µm) | 1.3 | 1.3 |
| Thickness (mm) | 0.83 | 0.66 |
| Grammage (g/m²) | 106 | 95 |
| Air permeability (l/m²s) @ 200 Pa | 494 | 411 |
| NaCl efficiency (%) @ 0.3 µm particles at 20 cm/s | 99 | 99 |
| Bending stiffness (Nmm) | 0.72 (machine direction) | 0.52 (machine direction) |
| | 0.35 (cross direction) | 0.32 (cross direction) |
| Dust holding capacity (g/m²) @ 50 Pa | 11.1 | 10 |

A filter medium (Comparative Example 2) with similar characteristics of the spunbond carrier layer as described in Comparative Example 1 was compared against Example 3. The meltblown filtration layer of Comparative Example 2 had similar characteristics as that of Example 3. Table 3 below provides a comparison of Example 3 and Comparative Example 2.

**[Table 3]**

| | Example 3 | Comparative Example 2 |
|---|---|---|
| Meltblown average fiber diameter (µm) | 3 | 3 |
| Thickness (mm) | 0.85 | 0.78 |
| Grammage (g/m²) | 103 | 95 |
| Air permeability (l/m²s) @ 200 Pa | 1018 | 948 |
| NaCl efficiency (%) @ 0.3 µm particles at 20 cm/s | 91 | 84 |
| Bending stiffness (Nmm) | 0.54 (machine direction) | 0.36 (machine direction) |
| | 0.29 (cross direction) | 0.3 (cross direction) |
| Dust holding capacity (g/m²) @ 50 Pa | 19.6 | 13.7 |

Comparing Example 1 and Comparative Example 1, as well as Example 3 and Comparative Example 2, the thickness and the grammage of the media increased. The increase of grammage of the media can be attributed to the glue, while an increase of thickness of the media can be attributed to the staple fiber pre-filter layer. According to conventional wisdom, thicker and heavier media usually have lower air permeability. However, the air permeability and DHC of Example 1 and Example 3 surprisingly increased when compared to Comparative Example 1 and Comparative Example 2, respectively. It can be concluded that the media of Example 1 and Example 3 are more open than their respective comparative examples.

## Claims

1. A filter medium comprising:
a pre-filter layer comprising staple fibers, wherein the staple fibers are thermally bonded together; and
a microfiber layer adhered to the pre-filter layer,
wherein the thickness of an adhesion interface is at most 30% of the thickness of the pre-filter layer and the microfiber layer.

2. The filter medium of claim 1, wherein an adhesive in the adhesion interface penetrates the pre-filter layer to at most 30% of the thickness of the pre-filter layer.

3. The filter medium of claim 1 or 2, wherein the adhesion interface is substantially planar to the plane of the layers.

4. The filter medium of any preceding claim, wherein an adhesive in the adhesion interface comprises polyurethane.

5. The filter medium of any preceding claim, wherein an adhesive in the adhesion interface has a basis weight in the range of 1 g/m² to 10 g/m², preferably 3 g/m² to 7 g/m².

6. The filter medium of any preceding claim, wherein the staple fibers of the pre-filter layer comprise bicomponent fibers.

7. The filter medium of claim 6, wherein the staple fibers comprise PET/coPET or PP/coPP.

8. The filter medium of any preceding claim, wherein the pre-filter layer has a basis weight in the range of 60 g/m² to 100 g/m²; and/or the staple fibers have a fiber diameter in the range of 10 µm to 40 µm; and/or the pre-filter layer has a thickness of less than 1 mm.

9. The filter medium of any preceding claim, wherein the microfiber layer has a basis weight in the range of 15 g/m² to 40 g/m²; and/or the microfiber layer comprises fibers having a fiber diameter in the range of 0.8 µm to 5 µm; and/or the microfiber layer has a thickness of less than 0.5 mm.

10. The filter medium of any preceding claim, wherein the microfiber layer comprises meltblown fibers.

11. The filter medium of any preceding claim, wherein fibers of the microfiber layer comprises polypropylene.

12. The filter medium of any preceding claim, comprising further functional layers.

13. A method of producing a filter medium, the method comprises:
providing a pre-filter layer comprising staple fibers, wherein the staple fibers are thermally bonded together;
providing a microfiber layer adhered to the pre-filter layer, wherein the thickness of an adhesion interface is at most 30% of the thickness of the pre-filter layer and the microfiber layer.

14. A filter element for filtration of cabin air, the filter element comprising the filter medium of any one of claims 1-12.
